# EUROPEAN PATENT APPLICATION

(11) **EP 4 651 432 A1**
(43) Date of publication of application: **19.11.2025**
(21) Application number: 24175397.9
(22) Date of filing: 13.05.2024
(51) Int. Cl.: H04L 9/40, H04L 67/12, G07C 5/00, H04L 43/50, G05B 19/04, G05B 23/02, G07C 5/08, H04L 12/40

(54) **SYSTEM AND METHOD FOR AUTOMATED VULNERABILITY SCANNING**

(71) Applicant: Argus Cyber Security Ltd, 6789155 Tel Aviv (IL)
(72) Inventor: Lavi, Oron, 6789155 Tel Aviv (IL); Bari-Ephraim, Yael, 6789155 Tel Aviv (IL); Geynis, Amit, 6789155 Tel Aviv (IL); Lazar, David, 6789155 Tel Aviv (IL)
(74) Representative: Aumovio Corporation

(57) **Abstract**

A system and method for testing may include automatically initiating a test procedure, the procedure including causing transmission of at least one message over a network which is internal to the tested system; receiving data communicated by a component in the tested system; identifying, based on the received data, a deviation from at least one of: an expected behavior of at least one component of the tested system, and a protocol or a communication standard used by the tested system; and automatically associating a specific test with the deviation.

## Description

The present invention relates generally to automated vulnerability scanning, detection and identification.

### BACKGROUND OF THE INVENTION

Modern automotive systems are complex environments consisting of multiple components, subsystems and multiple types of communication channels that allow the subsystems and components to communicate with each other, as well as communicate and/or interface with external systems. Typically, each subsystem is made of, or includes, different hardware and software components, and can use multiple types of communication channels and protocols to send and/or receive information, e.g., send or receive sensor data, commands, reports or control other subsystems or components.

By their nature, systems, subsystems and components included in vehicles are known to be susceptible to defects (also referred to in the art as vulnerabilities) which may be exploited by malicious entities (e.g., attackers) in order to gain control, or interfere with the function of, a system or component in a vehicle. In order to reduce the risk of such vulnerabilities, different techniques are used to detect and remove them during the development process. Generally, testing a system for vulnerabilities is referred to in the art as scanning, e.g., testing a system in order to discover, detect or identify vulnerabilities is referred to in the art as vulnerability scanning or scan process.

The ability to interface, interact or communicate with a tested system during scanning for vulnerabilities affects how much time the scanning process takes, and how effective the scan process is, that is, whether all, or at least most of the vulnerabilities are detected, identified or discovered during the scan process.

However, known, current systems and methods for vulnerabilities scanning require long time for completing a scan, fail to provide adequate coverage of a tested system and typically require a human user to oversee, conduct and control the scan process. Moreover, known, current systems and methods for vulnerabilities scanning require intimate knowledge and understanding of the system being tested, such knowledge and understanding are required in order to know which specific tests need to be performed (e.g., depending on the specific components in the tested system), what the expected results/outcomes of the tests are, and what do tests' results actually mean. To overcome some of these issues, some known, current systems and methods for vulnerabilities scanning include integrating an agent into the tested system. Such agent is used to monitor and report the behavior of the tested system from within. Clearly, inserting, planting or including an agent is a challenge which requires a lot of time and effort, e.g., a specific agent needs to be created for each specific system, a new system (one that includes the agent) must be created, and, using an agent has additional downsides, e.g., the agent may interfere with the natural functioning of the tested system and so on.

Therefore, there may be a demand for a solution to the aforementioned drawbacks. This is achieved by the subject matter of the appended independent claims. The dependent claims disclose optional embodiments thereof.

### SUMMARY OF THE INVENTION

An embodiment for testing includes automatically initiating a test procedure of a tested system, the procedure including causing transmission of at least one message over a network which is internal to the tested system; receiving data communicated by a component in the tested system; identifying, based on the received data, a deviation from at least one of: an expected behavior of at least one component of the tested system, and a protocol or a communication standard used by the tested system; and automatically associating a specific test with the deviation.

An embodiment includes generating traffic on the internal network includes selectively randomizing data in messages sent over the internal network. At least one service provided by at least one component in the tested system is automatically identifying, based on the received data. In an embodiment, a type and/or a function of a component included in a tested system is automatically identified and/or determined. A test procedure is automatically modified based on at least one of: a service and a component discovered in a tested system.

In an embodiment, a specific component is automatically associated with a deviation. In an embodiment, a state of a component is determined based on a response or a lack of response to a message sent within the tested system. A deviation may be identified based on an absence of a message; an unexpected content in a message; an absence of a modification of a message; and a mismatch with an expected sequence of events. A deviation identified may be a crash or a restart of a component or service.

In an embodiment, a list of components included in the tested system is received; each of the components in the list is associated with a component automatically identified on the network based on messages from component; and if not all components in the list are associated with a component on the network, then the embodiment updates a log and/or alerts a user.

In an embodiment, a message is automatically generated based on automatically identified, at least one of: a service provided by a component in the tested system, and a type and function of a component included in the tested system. In the embodiment, a message is generated based on at least one of: a protocol adhered to by a component in the tested system, a service provided by a component in the tested system and a function of a component in the tested system.

In an embodiment, a procedure or test that caused a deviation from an expected behavior is identified. In an embodiment, a tested system is designed/adapted to be included in a vehicle, and wherein the network internal to the tested system is an in-vehicle network. In an embodiment, a deviation includes one of: a hardware component that stopped functioning properly and a software component that stopped functioning properly. In an embodiment, a set of tests to be included in a test procedure is automatically selected based on the number and type of: components in the tested system and services provided thereby.

In an embodiment, a tests procedure includes a plurality of tests and a method comprises automatically determining whether or not the tested system passed at least one of the tests. In an embodiment, a test procedure includes a plurality of tests and a method comprises automatically determining the state of the tested system after conducting at least one of the tests. In an embodiment, amessage is automatically generated and transmitted according to at least one of: a protocol, a procedure, a component and/or a structure of the tested system. Other aspects and/or advantages of the present invention are described herein.

### BRIEF DESCRIPTION OF THE DRAWINGS

Non-limiting examples of embodiments of the disclosure are described below with reference to figures attached hereto that are listed following this paragraph. Identical features that appear in more than one figure are generally labeled with a same label in all the figures in which they appear. A label labeling an icon representing a given feature of an embodiment of the disclosure in a figure may be used to reference the given feature. Dimensions of features shown in the figures are chosen for convenience and clarity of presentation and are not necessarily shown to scale. For example, the dimensions of some of the elements may be exaggerated relative to other elements for clarity, or several physical components may be included in one functional block or element. Further, where considered appropriate, reference numerals may be repeated among the figures to indicate corresponding or analogous elements.

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
- Fig. 1: shows a block diagram of a computing device according to illustrative embodiments of the present invention;
- Fig. 2: shows a system according to illustrative embodiments of the present invention;
- Fig. 3: shows a system according to illustrative embodiments of the present invention; and
- Fig. 4: shows a flowchart of a method according to illustrative embodiments of the present invention.

### DETAILED DESCRIPTION

As described, current systems and methods for vulnerabilities scanning require long time for completing a full or substantial scan, they typically fail to provide adequate coverage of a tested system and typically require a human user to involved in the scan process.

Embodiments of the invention provide and enable new ways to automatically detect, reveal and/or identify vulnerabilities and their impact on a tested system, such that many more vulnerabilities can be detected and addressed before the system is being distributed to consumers.

Generally, embodiments of the invention include a computing device, e.g., computing device 100 as further described herein or, embodiments include just a central processing unit (e.g., controller 105 as further described herein), capable of generating either random data or specific sequences for a pre-defined protocol and use cases that are known to be critical for security functions.

In addition, some embodiments of the invention include a network or other interface which enables communication with a system under test, e.g., using different network architectures and protocols such as Controller Area Network (CAN), Ethernet, Wi-Fi (WiFi) etc.

Other protocols that may be applicable and used as described herein with reference to "protocols" or "a specific protocol" may be Scalable service-Oriented MiddlewarE over IP (SOME/IP), Universal Measurement and Calibration (XCP), Diagnostics over Internet Protocol (DoIP), Unified Diagnostic Services (UDS).

To automate the scanning process and increase its effectiveness, some embodiments include and/or use multiple mechanisms which can directly indicate the effect of certain communication patterns on the system under test. Such mechanisms dramatically accelerate the rate at which different scenarios are being tested. By being able to examine more scenarios in less time, embodiments of the invention greatly reduce the complexity of the process of covering complex systems. In addition, the mechanisms for producing indications as describe allow to pinpoint the exact scenario at which the undesired effect occurred, thus allowing the operator to quickly understand the system function that failed and quickly perform an analysis of the defect or vulnerability and present a solution.

Unlike current and/or known testing systems and methods, embodiments of the invention can perform true, actual or real black box testing of a system. For example, using mechanisms as described herein, embodiments of the invention can, without any prior knowledge of a tested system, be connected to the tested system, perform a test procedure including series or set of tests, and provide indications and reports that clearly describe aspects such as: which tests have passed or failed, which components failed during which tests, which vulnerabilities were identified and so on. It will further be noted that black box testing by embodiments of the invention as described may be performed without any additions or changes to the tested system, e.g., the tested system may be tested in the same configuration, capacity or form as intended to be used in production, e.g., on board a vehicle.

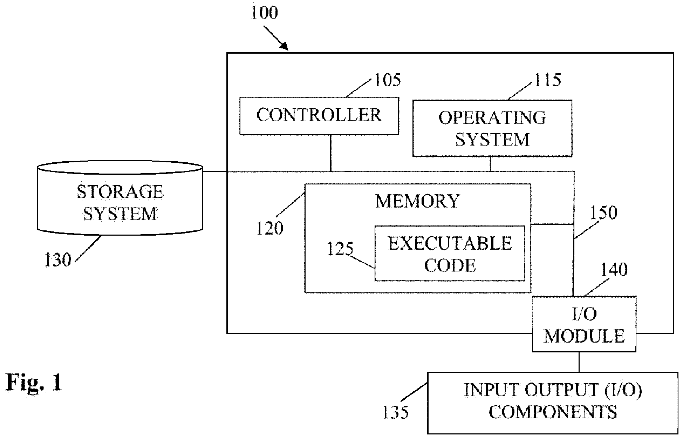

Reference is made to Fig. 1, showing a non-limiting, block diagram of a computing device or system 100 that may be used by, or included in, a system according to some embodiments of the present invention. For example, computing device 100 may be an ECU installed in a vehicle, e.g., an ECU 250, or a sensor 251 as further described herein. For the sake of clarity and simplicity, the term ECU will be used herein, however, it will be understood that any relevant components or elements may be applicable, e.g., IoT devices, smart sensors and the like.

In some embodiments, computing device (or system) 100 includes a controller 105 that is a hardware controller. For example, computer hardware processor or hardware controller 105 can be, or can include, a central processing unit processor (CPU), a chip or any suitable computing or computational device. In some embodiments, computing system 100 includes a memory 120, an operating system (OS) 115, executable code 125, a storage system 130, communication infrastructure 150, input/output (I/O) module 140 and I/O components 135 which may be detachably connected to computing device 100. In some embodiments, controller 105 (or one or more controllers or processors, possibly across multiple units or devices) is configured (e.g., by executing software or code) to carry out methods described herein, and/or to execute or act as the various modules, units, etc., for example by executing software or by using dedicated circuitry. More than one computing devices 100 may be included in, and one or more computing devices 100 may be, or act as the components of, a system according to some embodiments of the invention.

In some embodiments, OS 115 includes any code segment (e.g., one similar to executable code 125 described herein) designed and/or configured to perform tasks involving coordination, scheduling, arbitration, supervising, controlling or otherwise managing operation of computing device 100, for example, scheduling execution of software programs or enabling software programs or other modules or units to communicate. For example, OS 115 can be a commercial operating system, e.g., QNX or Linux.

In some embodiments, memory 120 is a hardware memory. For example, memory 120 may be, or may include machine-readable media for storing software e.g., a Random-Access Memory (RAM), a read only memory (ROM), a memory chip, a flash memory (referred to herein as flash), a volatile and/or non-volatile memory or other suitable memory units or storage units. Memory 120 may be or may include a plurality of, possibly different, memory units. In some embodiments, memory 120 is a computer or processor non-transitory readable medium, or a computer non-transitory storage medium, e.g., a RAM. Some embodiments may include a non-transitory storage medium having stored thereon instructions which when executed cause the processor to carry out methods disclosed herein.

Executable code 125 can be software, an application, a program, a process, task or script. A program, process, task, application or software as referred to herein may be any type of instructions, e.g., firmware, middleware, microcode, hardware description language etc. that, when executed by one or more hardware processors or controllers 105, cause a processing system or device (e.g., system 100) to perform the various functions described herein. In some embodiments, executable code 125 is executed by controller 105 possibly under control of operating system 115.

For example, executable code 125 may be an application that automatically performs vulnerability scanning as further described herein. Although, for the sake of clarity, a single item of executable code 125 is shown in Fig. 1, a system according to some embodiments of the invention may include a plurality of executable code segments similar to executable code 125 that may be loaded into memory 120 and cause controller 105 to carry out methods described herein.

Executable code 125 may be, or may include several applications, services, routines or other software modules or components. It will be understood that components of a system (e.g., components of ECU 230 and/or of tested system 260) as described herein may be software components such as applications, services, routines or other software components. For example, controller 105 in testing unit 210 may send a message to a first software service provided or executed by controller 105 in ECU 230 based on a message that sent/received by/from a second, different software service provided or executed by controller 105 in ECU 230. For the sake of clarity and simplicity, controller 105 in testing unit 210 will be referred to herein as simply testing unit 210, it will be understood that, where applicable, "testing unit 210" means "a controller 105 in testing unit 210".

Storage system 130 may be or may include, for example, a hard disk drive (e.g., when connected to testing unit 210 as further described), a universal serial bus (USB) device, a flash memory or unit (e.g., in an ECU 250) or any other suitable removable and/or fixed storage unit. In some embodiments, some of the components shown in Fig. 1 may be omitted. For example, in an ECU, storage system 130 may be a non-volatile memory (e.g., a flash memory) included in memory 120 of an ECU. Accordingly, although shown as a separate component, storage system 130 may be embedded or included in system 100, e.g., in memory 120.

Computing device 100 may include a communication infrastructure 150 that may be, for example, a bus, e.g., a CAN or other bus, or other system connected to controller 105, operating system 115, memory 120 and I/O module 140 enabling controller 105, operating system 115, memory 120 and I/O module 140 to communicate. I/O module 140 may include ports, or other hardware outlets enabling external devices to communicate with internal components, e.g., I/O module 140 may enable an external device to write data to memory 120, send commands to controller 105 etc.

I/O components 135 may be, may be used for connecting (e.g., via included ports) or they may include: a mouse; a keyboard; a touch screen or pad or any suitable input device. I/O components may include one or more screens, touchscreens, displays or monitors, speakers and/or any other suitable output devices. Any applicable I/O components may be connected to computing device 100 as shown by I/O components 135, for example, a wired or wireless network interface card (NIC), a universal serial bus (USB) device or an external hard drive may be included in I/O components 135. For the sake of simplicity, storage system 130 is shown as connected to communication infrastructure 150, storage system 130 may be connected via I/O module 140, e.g., a port therein.

A system according to some embodiments of the invention may include components such as, but not limited to, a plurality of central processing units (CPU) or any other suitable multi-purpose or specific processors, controllers, microprocessors, microcontrollers, field programmable gate arrays (FPGAs), programmable logic devices (PLDs) or application-specific integrated circuits (ASIC). A system according to some embodiments of the invention may include a plurality of input units, a plurality of output units, a plurality of memory units (e.g., memory 120 in an ECU may include a flash memory and a RAM), and a plurality of storage units. A system may additionally include other suitable hardware components and/or software components. In some embodiments, a system may include or may be, for example, a server computer, a network device and any number of devices, e.g., internet of things (IoT) devices, ECUs in a vehicle, e.g., ECUs included in a car, a train, a boat or an airplane.

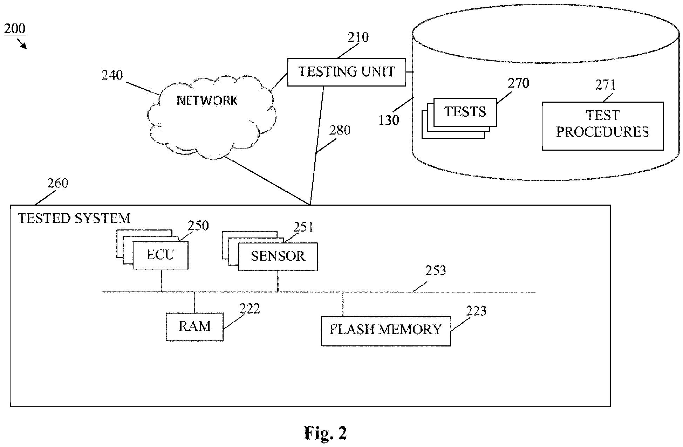

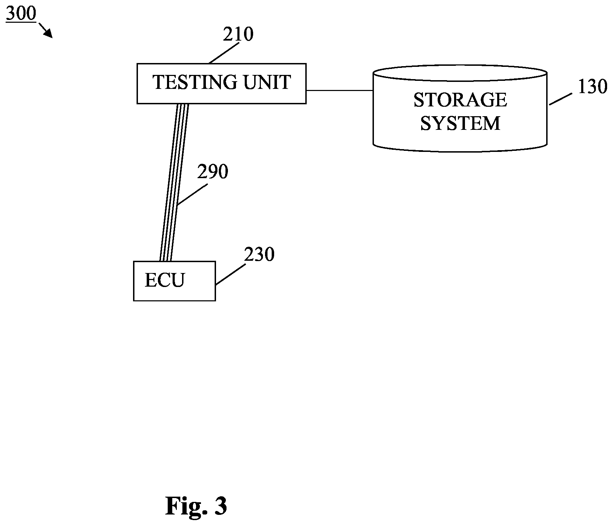

Reference is made to Fig. 2 which shows a system 200 according to illustrative embodiments of the present invention. As shown in Fig. 2, a system may include a testing unit 210 that may include, or be operatively connected to, a storage unit or system 130. As further shown, storage unit 130 may include a set of one or more tests 270and one or more test procedures 271. As shown, system 200 may include a tested system 260, a network 240 and a connection line 280 enabling communication between testing unit 210 and tested system 260. It will be noted that at least some of the components and elements shown in Fig. 2 as included in a system 200 are optional. For example, network 240 which may enable communication between testing unit 210 and tested system 260 is an optional element that may be removed from, or non-existent in, system 200 (e.g., as illustrated in Fig. 3). For example, communication between testing unit 210 and tested system 260 may be done only over connection line 280 in a system 200 which does not include network 240. Storage unit or system 130 is described with reference to Fig. 1.

Testing unit 210 may be, a device 100, or it may include components of device 100. For example, testing unit 210 may be a computer or server as known in the art. Tests 270 may be electronic files or other digital files or entities that store information. For example, a test 270 may define, list, describe or include any information needed for dynamically causing transmission messages over a communication line, bus or network inside tested system 260. For example, rules, parameters or values which define or describe aspects such as: source or destination addresses to use in messages, content of messages, a frequency of sending a message, number of times to send and so on may all be defined in a test 270. A test 270 may define or include logic or flow for a test. For example, logic in a test 270 can select a response message to be sent upon reception of a specific message, from an internal bus of tested system 260.

Tests 270 may generally be designed to cover various aspects, operations or components of tested system 260. For example, a first test 270 may be directed to an infotainment system when tested system 260 is designed for a vehicle, e.g., include sending messages destined to the infotainment system, and a second test 270 may be directed to the headlights controller.

Tests 270 may define, list, describe or include any information of data required in order to identify, based on data received from tested system 260, a deviation from an expected behavior of at least one component of tested system 260. Tests 270 may define, list, describe or include any information of data required in order to identify, based on data received from tested system 260, a deviation from a protocol or a communication standard used by the tested system.

For example, equipped with intimate knowledge of protocols such as SOME/IP, XCP, DoIP and UDS, testing unit 210 tracks flows of messages and identifies or determines whether or not the flows are according to specific protocols, that is, testing unit 210 identifies a breach of, or deviation from, a protocol.

For the sake of clarity and simplicity, the terms "deviation from an expected behavior" and "deviation from an expected protocol" are also referred to herein simply as "deviation", these terms may be used interchangeably herein. The terms "deviation", "malfunction" and "failure" as referred to herein may mean the same thing and may be used interchangeably herein.

For example, using information in a test 270 testing unit 210 can determine whether tested system 260 malfunctioned, crashed, restarted or otherwise failed the test. Using information in a test 270 testing unit 210 may generate or select one or more message to be sent over internal communication infrastructure 253 in response to a message received from internal communication infrastructure 253. Testing unit 210 may be aware of the current test 270 and may record any event with respect to the current test 270. For example, upon identifying a crash, restart, a malfunction, or other unexpected behavior of a tested system, testing unit 210 records the current test in association with any information related to the crash or malfunction, e.g., which specific ECU 250 or service in ECU 230 was tested when a crash occurred. Tests 270 may include human readable material describing the specific components a test 270 is designed for and covers, thus, by simply pointing to a specific test 270, testing unit 210 automatically provides valuable information to a user.

Tested systems 260 may include one or more ECUs 250, one or more sensors 251, a communication infrastructure 253 that can be, for example a bus, a CAN or Ethernet network infrastructure. As further shown, tested system 260 may include a flash memory 223 and a random-access memory (RAM) 222.

Tested system 260 may be any device, system, or set of components, e.g., intended to be installed in a vehicle. For example, tested system 260 or parts or components of tested system 260 may be, or may be included or embedded in, an IoT device or a vehicle, e.g., an aircraft, car, train or ship. Although vehicles such as cars are mainly described herein, other vehicles such as ships, trains and aircrafts are similarly applicable, it will be understood that the scope of the invention is not limited by the type, usage or nature of tested system 260. As referred to herein, components of a tested system (e.g., tested system 260 and/or ECU 230) may be software components, e.g., applications, services, routines or other software modules or components.

ECUs 250, sensors 251 and test procedures 271 may be collectively referred to hereinafter as ECUs 250, test procedures 271 and sensors 251 or individually as ECU 250 test procedure 271 and sensor 251, merely for simplicity purposes.

Sensors 251 can include more than a mere temperature or pressure sensing or measuring unit, e.g., a sensor 251 can include a computing device 100 or parts thereof, e.g., a sensor 251 may include a memory 120, a controller 105 and/or executable code 125 and the sensor 251 may store and process measurements, receive network packets and send network packets, messages or frames. For example, a sensor 251 may be an oil pressure sensor, a temperature sensor and the like, e.g., when an embodiment is, or is included in, a train or car or other vehicle. When an embodiment is included in an airplane, ship or spacecraft, a sensor 251 may be a unit that senses or measures, for example, elevation, acceleration, air speed or flow and the like.

ECUs 250 may be, or may include any components of, computing device 100. For example, an ECU 250 may include a controller 105, a memory 120 (e.g., RAM and Flash memories), may include a communication infrastructure 150 in the form of a bus, and may include an I/O module 140. Typically, ECUs 250 are associated with, or designed for, specific components, e.g., a first ECU 250 may monitor and control an engine in a car, and a second ECU 250 may monitor and control the windows. When an embodiment is included in an airplane, ship or spacecraft, an ECU 250 may be a line-replaceable unit (LRU), a lower line-replaceable unit (LLRU), a line-replaceable component (LRC), or a line-replaceable item (LRI) component.

Communication infrastructure 253 may be any communication line, bus or network, e.g., an Ethernet network, a CAN bus and the like. For the sake of simplicity, communication infrastructure 253 is referred to herein as network 253 and communication infrastructure 150 is referred to herein as bus 150. Memory 223 may be, or may components of memory 120 as described herein. RAM 222 may be as known in the art, e.g., used aby controllers 105 in tested system in order to run program applications as known in the art. Communication infrastructure 253 may be any suitable network that enables ECUs 250 and sensors 251 to communicate or exchange digital information, as well as to read/write data from/to memories 222 and 223. Communication infrastructure 253 may be, may include or may comprise any suitable bus or network infrastructure and support any suitable protocols, e.g., in-vehicle network 253 may be an Ethernet network, a CAN network or a combination thereof and protocols such as, internet protocol (IP), transmission control protocol (TCP) and the like may be used for sending data over communication infrastructure 253. Accordingly, numerous elements of communication infrastructure 253are implied but not shown, e.g., switches, routers, gateways etc. It will be recognized that embodiments of the invention are not limited by the nature of communication infrastructure 253.

Network 240 may be any suitable network that enables testing unit 210 to communicate with tested system 260. For example, network 240 may be a private or public IP network, or the internet, or a combination thereof. Network 240 may be a custom-made bus or network including hardware wires directly connecting testing unit 210 with tested system 260. Accordingly, numerous elements of network 240 are implied but not shown. For example, network 240 can be, or can included a Wi-Fi network and messages exchanged as described between testing unit 210 and a tested system can be transmitted over a Wi-Fi network in network 240.

Connection line 280 may be, or may include, any hardware and software required for directly connecting testing unit 210 with one or more ports in tested system 260. For example, connection line 280 may be a wire connected to testing unit 210 and with a jack that fits into a jack in an I/O module 140 of tested system 260. For example, connection line 280 can be plugged into a port in tested system 260 such that any communication of data over communication infrastructure 253 is received by testing unit 210. Connection line 280 can be plugged into a port in tested system 260 such that testing unit 210 can cause transmission of a message over communication infrastructure 253.

Reference is made to Fig. 3 which shows a system 300 according to illustrative embodiments of the present invention. ECU 230 may be similar or identical to ECU 250 as described herein, numeral 230 is used for clarity. Connection lines 290 may be similar or identical to connection line 280, or a number of connection lines 280 as described herein, numeral 290 is used for clarity.

As shown in Fig.3, an ECU 230 may be used, or act as a tested system 260. Any systems or operations described herein with reference to tested system 260 may be applicable here. For example, testing unit 210 may receive messages sent over communication infrastructure 150 which may be internal to ECU 230 and testing unit 210 may send messages over the communication infrastructure 150. In some embodiments, testing unit 210 is connected to an internal communication infrastructure (e.g., communication infrastructure 150 or communication infrastructure 253) in a tested system (e.g., tested system 260 or ECU 230) over one single interface or line, e.g., a network or bus interface and automatically preforms automated tests procedures as described herein based on messages received from the internal communication infrastructure. Otherwise described, testing unit 210 can perform all methods described herein where and when the only input it receives from a tested system, e.g., from tested system 260 or from ECU 230, is messages sent over a communication bus, network or other infrastructure which is internal to the tested system.

As illustrated in Fig. 3, using a set of wires, testing unit 210 may be connected to a number of different ports, jacks or other hardware connections of tested ECU 250. For example, while testing ECU 250 and eavesdropping on communication infrastructure 150, testing unit 210 can read output produced by ECU 230, e.g., ECU 230 may produce output on some ports based on its state or context, e.g., a pin that indicates a reboot. Such state or context may be automatically used by testing unit 210 in order to select messages to generate as described, determine a test has failed or passed and so on. Determining a test has failed as described herein may mean detecting that at least a component in a tested system has malfunctioned or failed to operate as expected. Otherwise described, determining a test has failed may be based on identifying a component in a tested system has deviated from an expected performance, operation or functionality. In some cases, testing unit 210 can determine a tested system has passed a test even though some deviations were detected. For example, based on information in a test procedure 271 or test 270, some deviation of some (possibly non crucial) components may be recorded but otherwise ignored and testing unit 210 may thus still determine the tested system passed the test.

A test procedure 271 can be automatically started by a remote or external system, e.g., a remote computer may signal or command testing unit 210 to start a test, e.g., indicating which test procedure 271 to perform. A specific or example of a test procedure 271 may be "Auto-Discovery" procedure which, when executed by testing unit 210, includes automatically discovering components (e.g., ECUs, sensors etc.) and services (e.g., software services) and automatically generating a test procedure 271 which includes tests 270 that cover some, or even all discovered components and services. For example, when a new version of ECU 230 or some of ECUs 250 was compiled, deployed, and ready to be tested, a remote computer signals testing unit 210 to commence a test procedure 271. A test procedure 271 may include any information or data needed by testing unit 210 in order to perform the procedure, e.g., a test procedure 271 includes a list of tests 270 to perform, the order by which to run the tests 270, what to do if a test fails and so on.

One embodiment of the invention is a method of testing which includes automatically initiating a test procedure of a tested system, the procedure including causing transmission of at least one message over a network which is internal to the tested system. For example, commanded to test tested system 260, testing unit 210 automatically selects a set of tests 270 and automatically initiates a testing procedure for tested system 260, the procedure including the selected tests 270.

Test procedures 271 (or a test procedure 271) may include information used by testing unit 210 in order to automate testing as described. For example, a test procedure 271 may include a list of tests 270 to run, the order by which to run the tests 270, the test procedure may define what to do if a component fails a specific test 270, when to start the test, conditions of stopping or aborting a test and so on. Testing unit can automatically generate a test procedure 271. For example, having automatically discovered or identified components, ECUs or services as described, testing unit 210 can generate a test procedure 271 by selecting tests 270 which are associated with the discovered components, ECUs or services and including the selected tests 270 in a newly, automatically generated test procedure 271.

Testing unit 210 can automatically start and stop tests procedures, e.g., start a test procedure 271 at a certain (e.g., preconfigured) time or date, or testing unit 210 can automatically select the number of times a test procedure 271 will be performed. Testing unit 210 can automatically start and stop tests based on configuration data, e.g., automatically select tests 270 to include in a test procedure based on an attribute of ECU 230, e.g., based on the type of ECU 230, identification value identifying ECU 230 etc.

As referred to herein, a type of an ECU can be, for example, an engine ECU, a body ECU, an infotainment ECU, a telematics ECU, gateway ECU, an airbag ECU, an electronic power steering ECU and so on. A type of an ECU or other component may be obtained, e.g., using an identification (ID) value or parameter. For example, testing unit 210 obtains an ID from an ECU 250 (or from ECU 230) and, using the ID searches a database in storage 130 wherefrom a datasheet or other material describing the ECU or component can be readily retrieved.

Testing unit 210 can automatically start a test procedure upon detecting tested system 260 is in a specific state, automatically upon detecting that tested system 260 has changed state. For example, connected to a number of ports in ECU 230 over connection lines 290, testing unit 210 can sense or identify that ECU 230 has stopped functioning, crashed, restarted or has malfunctioned, or that ECU 230 has crashed, restarted or completed a boot sequence. Accordingly, testing unit 210 can initiate a test procedure 271 automatically, based, or in response to, a state or event related to tested system 260 as well as based on other aspects, e.g., time, date, or configuration data.

For example, certain communicative behavior is expected for certain functions of automotive systems that implement standardized automotive protocols. Such behavior is reflected in messages sent from various components in the system. Accordingly, by mapping various messages or message flows to states, procedures flows or context, testing unit 210 can determine or identify a state or context of a tested system based on messages received from the tested system as described herein.

For example, messages sent during boot time, or messages that are service announcements, or messages related to service scanning or subscription requests may all be monitored, recorded and processed and may be used to determine the current state of a tested system under as well as be used for identifying deviations or failures that occurred as result of a test as described.

Testing unit 210 can automatically cause transmission of at least one message over a network which is internal to the tested system. For example, testing unit 210 can send a message over connection line 280 into communication infrastructure 253 which is internal to tested system 260 thus causing transmission of the message over a network which is internal to a tested system. Similarly, testing unit 210 can send a message over one of connection lines 290 into communication infrastructure 150 which is internal to ECU 230.

In some embodiments, testing unit 210 can indirectly cause transmission of a message over an internal network. For example, testing unit 210 may send a first message to a first component in tested system 260 thus causing the component to send a second, different message over internal network 253. For example, testing unit 210 may send a message to one of sensors 251 thus causing the sensor to send a message to one of ECUs 250, e.g., in order to test how ECU 250 reacts to messages from the sensor 251. In another example, testing unit 210 may send a first message to a first software component, e.g., send a message over internal communication infrastructure 150 to a service or application executed by controller 105 in ECU 230, thus causing the software component to send a second, different message over internal communication infrastructure 150 in ECU 230.

In another example, testing unit 210 can cause transmission of a message over an internal network by interacting with a tested system, for example, by signaling ECU 230 over one of connection lines 290 (e.g., changing voltage from "0" to "1"), testing unit 210 can cause ECU 230 to perform various operations which may be, or may cause or include, sending messages over a network which is internal to ECU 230, e.g., communication infrastructure 150.

Testing unit 210 may receive data communicated by a component in a tested system. Generally, connected to internal communication infrastructures 150 and 253 in computing device 100 and tested system 260 respectively, e.g., over connections 280 and 290, testing unit 210 may receive all messages communicated over these internal communication infrastructures. For example, testing unit 210 may listen to, or tap into, communication infrastructure 150 or communication infrastructure 253 using sniffer mode as known in the art. Using connections 280 and 290, testing unit 210 can send messages over internal communication infrastructures 280 and 290. For example, connected to network 253, testing unit 210 can receive messages exchanged between ECUs 250 and sensors 251, connected to communication infrastructure 150, testing unit 210 can receive messages exchanged between software modules, units or components in computing device 100 or ECU 230.

Testing unit 210 may automatically identify, based on the received data, a deviation from expected operation of a tested system. For example, following a message it sent over network 253 in tested system 260, controller 105 in testing unit 210 may expect a response message to be received within a predefined time interval, if the response message is not received as expected, controller 105 in testing unit 210 may determine a deviation from expected operation has occurred.

Testing unit 210 may automatically identify a deviation from an expected behavior of a tested system. For example, an expected behavior of ECU 230 may include sending, by a service executed by controller 105 in ECU 230, a set of messages after, or in response to, transmission of a specific message over bus 150, if such, set of messages is not transmitted over bus 150 after the specific message was sent over bus 150 then testing unit 210 may determine a deviation from an expected behavior has occurred.

Testing unit 210 may automatically identify a deviation from a protocol. For example, a communication protocol may define sequences of messages that need to be sent and/or received in order to adhere to the protocol, by inspecting messages sent over an internal network of a tested system, testing unit 210 may verify that specific communication or other protocols are followed or adhered to. Upon identifying or determining failure of a tested system to follow or adhere to a protocol, controller 105 in tested unit 210 may determine that a deviation from the protocol has occurred.

For example, the TCP/IP protocol dictates that, upon receiving a message, the receiving end has to send an ACK message, for example, if testing unit 210 identifies a message sent to one of sensors 251, e.g., from one of ECUs 250, but, over a predefined time interval, the sensor 251 does not ACK the message then testing unit 210 may determine a protocol breach. Other deviations from the TCP/IP protocol may be wrong sequence numbers, wrong source/destination addresses, wrong size in the message header and the like.

Testing unit 210 may automatically associate a specific test with the deviation. For example, testing unit 210 may record that a deviation as described occurred during the third test 270 in a test procedure and may report the recorded information to a user.

In some embodiments, generating traffic on the internal network of a tested system includes selectively randomizing data in messages sent over the internal network. For example, testing unit 210 randomizes one or more of: size, destination, content of messages. To randomize data sent testing unit 210 can randomize any field in headers of messages as well as the actual content or payload in messages. In some embodiments, testing unit 210 uses fuzzing techniques as known in the art in order to randomize messages attributes such as headers and content.

In some embodiments testing unit 210 automatically discovers or identifies, based on the data received from a tested system, at least one service provided by at least one component in the tested system. For example, specific services use specific IP port numbers in order to advertise a service, e.g., by broadcasting the service. Accordingly, in an embodiment, by tapping into (or sniffing as known in the art) an internal network as described, testing unit 210 discovers and identifies services provided by components in a tested system. In some cases, upon discovering, learning about or identifying a service as described, testing unit 210 records (and/or reports) any information relevant to the service, e.g., the address of the component providing the service, the type of component providing the service (e.g., type of ECU 250 or sensor 251).

In some embodiments testing unit 210 automatically discovers and identifies components in a tested system, and testing unit 210 automatically determines a type and function of a component included in the tested system. For example, by receiving, examining, and processing broadcasted or other messages advertising a service or component in tested system 260, testing unit 210 identifies at least some of ECUs 250, that is, testing unit 210 determines these ECUs 250 are included in tested system 260. In addition to determining whether an ECU 250 is present and/or active in tested system 260, in an embodiment, testing unit 210 automatically and specifically identifies the ECU. For example, by sending various messages, e.g., according to a specific protocol, testing unit 210 determines a first ECU 250 in tested system 260 is one designed to control the brakes of a vehicle and determines a second ECU 250 in tested system 260 is one designed to control the headlights of the vehicle.

For example, having received, from an ECU 250, an identification (e.g., serial number, model number or any other ID) testing unit 210 can access relevant information, e.g., a data sheet from a manufacturer etc. An ID of an ECU may be mapped to specific tests 270. Similarly, services can identify themselves, e.g., as defined in a known in the art protocol.

In another example, testing unit 210 probes a tested system in an attempt to discover components or services. For example, specific ECUs or services may be designed, or may operate such that a reception of a specific message causes them to respond with a another specific message (e.g., as defined by a specific protocol), accordingly, by sending (e.g., broadcasting) specific messages, testing unit 210 can discover ECUs, services or other components in a tested system.

Automatically discovering and identifying services and components, by testing unit 210 as described, provides various advantages, for example, to save time, testing unit 210 can remove, from a test procedure 271, tests 270 which are designed, or are specific for, a specific service or component which is not included in a tested system. By automatically excluding tests 270 from a test procedure 271 testing unit 210 can avoid performing certain tests to thus improve the total time it takes to complete the test cycle which covers all functionality of a tested system.

In some embodiments testing unit 210 automatically modifies a test procedure based on a service or a component discovered in the tested system. For example, having discovered or learned that an ECU 250 that controls the engine of a vehicle is present in tested system 260, testing unit 210 selects a specific test 270 designed for testing the operation of an engine control ECU, e.g., testing unit 210 includes the specific test 270 in a test procedure 271. Accordingly, in an embodiment, testing unit 210 automatically and dynamically modifies a test procedure based on components which were automatically discovered and identified in a tested system. In some embodiments, testing unit 210 automatically and dynamically selects one or more tests to be included in, or excluded from, a test procedure 271, e.g., based on automatically discovered service or component as described.

For example, if a specific ECU 250 expected to be include in tested system 260 is not identified (e.g., does not respond to query messages and no message from the specific ECU 250 has been received) then testing unit 210 automatically exclude, from a test procedure, one or more tests 270 which are designed to test the specific (but missing) ECU 250. In another example, upon discovering an unexpected ECU 250, testing unit 210 may automatically add one or more tests 270 to a test procedure 271 such that the teat procedure covers the discovered components.

In some embodiments testing unit 210 automatically associates a specific component or service in a tested system with the deviation from an expected behavior or protocol. For example, having identified components and services, in the course of a specific test 270, testing unit 210 may send a specific message to a specific ECU 250 or specific service in ECU 230, failure to receive an expected response to the specific message may cause testing unit 210 to determine that the specific ECU 250 or service is associated with a deviation, that is, a failure to pass the specific test 270. Accordingly, testing unit 210 can pinpoint the faulty ECU, service or component, and associate it with failure of a specific test 270. For example, testing unit 210 can produce a report indicating that a specific sensor 251 has failed the third test 270 in a test procedure 271.

In some embodiments testing unit 210 sends specific messages over a bus or network in the tested system, and determines a state of a component based on a response, or based on a lack of a response. For example, protocols adhered to by ECUs 250, sensors 251 and services as described typically define a response that a receiver is to send upon reception of a specific message, In an embodiment, testing unit 210 sends such specific message in order to determine the state of a component and determine the component is functioning properly if an expected response is received, or determine the component is malfunctioning (crashed, restarted) if no response is received or if a wrong (per a specific protocol) response is received.

In some embodiments testing unit 210, having determined that a specific component has failed a specific test 270, testing unit 210 records the specific component and specific test 270, removes the specific test 270 for the test procedure 271 that is currently performed to thus create a modified test procedure 271 and either continues with the modified test procedure 271 or restart a testing of a tested system using the modified test procedure 271. Accordingly, as opposed to some known techniques, systems and methods which typically stop a test upon a failure, embodiments of the invention can identify multiple failures by dynamically changing the specific tests 270 used in dynamically changed test procedures.

In some embodiments testing unit 210 identifies or determines a deviation has occurred based on an absence of a message, or based on an unexpected content in a message, or based on an absence of a modification of a message, or based on a mismatch with an expected sequence of events. For example, in some communication mediums, such as CAN bus, certain parts of the communication packet are expected to be modified by a receiving listener on the network. For example, by monitoring these specific bits during communication and detecting that these bits remained unchanged, testing unit 210 determines that a deviation from a protocol has occurred, and/or the receiving unit has malfunctioned, e.g., crashed.

Specifically, part of the CAN bus protocol contains an "ACK bit". When a system receives a transmitted packet, it changes this bit to "1" to acknowledge it. If the intended receiver crashed, or is otherwise malfunctioning, the ACK bit remains unchanged, and this can be identified by testing unit 210 as a misbehavior, deviation, malfunction or failure. Otherwise described, a "0" where and when a "1" is expected may be identified, by testing unit 210, as unexpected content in a message.

For example, an absence of a message identified by testing unit 210 as a deviation or failure is an absence of an expected (per a specific protocol) acknowledge message (or ACK as known in the art).

For example, certain communication protocols include queries for querying (retrieving) metadata or other identifying information about the system. For example, a specific protocol known as diagnostic protocol over IP (DoIP) defines an identification query" to which a receiver is expected to respond with a specific response message.

By issuing such requests while performing certain test sequences, testing unit 210 may detect the exact point of a test sequence at which the system under test failed. For example, during a test procedure 271 which includes performing a number of tests 270, following completion of each test 270, testing unit 210 sends a query message to some of ECUs 250 or to some services in ECU 230 thus ensuring the ECUs 250 or services are still up and running and properly functioning. If, following a specific test 270, a component does not respond as expected then testing unit 210 may determine (and record and inform) that the component had failed the specific test 270. Accordingly, embodiments of the invention may associate a specific component with a specific test thus pinpointing failures of specific components in association with specific tests. In other embodiments, testing unit 210 periodically and/or continuously pings, probes or otherwise checks some or even all components and services in a tested system, e.g., testing unit periodically and/or continuously send query messages to components in the tested system thus a point where a component has stopped functioning is accurately known.

In some embodiments testing unit 210 receives a list of components included in a tested system, associates each of the components in the list with a component automatically identified in a tested system, e.g., based on messages from components, and if not all components in the list are associated with a component in a tested system, then testing unit 210 updates a log and/or alerts a user. Accordingly, testing unit 210 can automatically verify that all components which are expected to be in a tested system are indeed therein. For example, the manufacturer of ECU 230 may provide a list of services provided by ECU 230, using such list, testing unit 210 sends messages which, per the relevant protocol, cause the service to respond with a specific message. Accordingly, testing unit 210 can perform an automated inventory check for a tested system.

In some embodiments testing unit 210 automatically generates a message for sending over an internal bus or network based on a service or component which it previously automatically discovered. In some embodiments testing unit 210 automatically generates a message for sending over an internal bus or network based on a type and function of a component which it previously automatically discovered. For example, having automatically discovered a service on ECU 230, testing unit 210 sends messages to the discovered service in order to verify it is functioning properly.

In some embodiments testing unit 210 sends a message, e.g., destined to a specific ECU 250 or to a specific service in ECU 230 after and based on, a type and function of the specific ECU 250 or specific service which were automatically identified, e.g., as described. For example, having determined that a discovered ECU 250 controls the air conditioning system, testing unit 210 sends messages for which, e.g., per a standardized protocol or data from the manufacturer, the discovered ECU 250 is expected to respond to in a specific, known way, e.g., acknowledge a message, perform an action and report a result etc.

In another example, having discovered and identified a specific service included in, or executed on ECU 230 testing unit 210 automatically adds a test 270 that is designed to test the specific service, e.g., request specific operations or services which are provided by automatically discovered service. Accordingly, adapted to automatically discover components and services in a tested system, determine the type and function of the discovered elements and adapt a test procedure such that discovered elements are tested, testing unit 210 provides a fully automated testing system.

In some embodiments testing unit 210 generates messages which it sends over a bus or network internal to a tested system based on a protocol adhered to by a component in the tested system, or based on a service provided by a component in the tested system, or based on a function of a component in the tested system. For example, testing unit 210 generates messages according to a function of a specific ECU, according to specific services provided by an ECU or according to any components or elements in a tested system. Accordingly, by generating service/ECUs specific messages, testing units 210 can test specific services/ECUs.

In some embodiments testing unit 210 identifies a procedure or specific test 270 that caused a deviation from an expected behavior or protocol. For example, some procedures taking place in a vehicle can be traced based on a flow of messages, e.g., a first message (from a service requester) requesting a service, a second message (from the service provider) acknowledging the request, a third message (from the service provider) reporting result or conclusion of an operation or service and so on. In an embodiment provided with the relevant protocols and any other relevant data, and provided with messages flowing over an internal network as described, testing unit 210 tracks flows and determines whether a flow is related to a deviation, malfunction or failure (e.g., the service provider has crashed and stopped responding) or whether the flow is related to an expected behavior, e.g., the service provider has successfully provided the service. Upon identifying a deviation, testing unit 210 can record the specific flow which exhibited the deviation as well as other data, e.g., the specific test 270, components involved etc. Any data recorded by testing unit 210 can be provided, by testing unit 210 to a user, e.g., presented on a screen, sent in an email etc.

The term protocol as referred to herein may mean any protocol and/or communication standard used by manufacturers of a tested system. For example, with respect to the vehicle industry, a protocol may be SOME/IP, XCP, DoIP or UDS.

An example of an expected behavior as referred to herein can be that of an in-vehicle component or system which operates according to protocols and communication standards used by the vehicle industry, e.g., standards such as CAN or Ethernet and protocols such as SOME/IP, XCP, DolP and UDS.

In some embodiments a tested system (e.g., tested system 260) is designed and/or adapted to be included in a vehicle, and the network internal to the tested system (e.g., communication infrastructure 253) is an in-vehicle network.

In some embodiments testing unit 210 identifies or determines a failure or unexpected behavior (deviation) by determining that a hardware component has stopped functioning properly. For example, a specific protocol may define a beacon message is to be sent by one of ECUs 250 every known interval (e.g., every 15 milliseconds), testing unit 210 may set a time upon reception of a beacon message and determine the specific ECU 250 has crashed or ceased to operate properly if the time expires before a subsequent beacon message is received.

In some embodiments testing unit 210 identifies or determines a failure or unexpected behavior (deviation) by determining that a software component has stopped functioning properly. For example, testing unit 210 can continuously and/or periodically probe or ping a service or other software component in ECU 230 or in one of ECUs 250 and determine the service or software has crashed or is otherwise not functioning properly if a ping or probe message is not responded to.

In some embodiments testing unit 210 automatically selects a set of tests 270 to be included in the test procedure 271 based on the number and type of components in a tested system. For example, having automatically identified a specific set of ECUs 250 in tested system 260, testing unit 210 automatically selects one or more sets of tests 270 to be used for testing tested system 260. For example, specific ECU types may be associated with specific tests 270 in a database in storage system 130 such that when the type and number of ECUs are identified in a tested system, the selection of tests 270 is fully automated. Similarly, specific tests 270 may be associated with specific software, e.g., specific services executed on ECU 230 may be mapped to specific tests 270 thus enabling not only a fully automated discovery of components but also a fully automated testing of the components. In some cases, testing unit 210 is provided with a list of components included in a tested system and, using a mapping between components and tests, testing unit 210 automatically defines and executes test procedures, that is, select tests 270 to be included in one or more test procedures and execute the test procedures.

In some embodiments testing unit 210 a test procedure 271 includes a plurality of tests 270 and testing unit 210 automatically determines whether the tested system (e.g., ECU 230) passed at least one of the tests 270. For example, if a service in ECU 230 stops responding then testing unit 210 may determine it failed the test. Any deviation as described may cause testing unit 210 to determine failure to pass a test. Testing unit 210 may, upon determining a tested system failed a test, perform an action. For example, an action may include informing or alerting a user, restarting a test, rebooting the tested system and restarting a test, selecting different tests 270 for a subsequent test procedure and so on. For example, if one of ECUs 250 in tested system 260 fails a specific test 270 in a test procedure 271 then testing unit 210 may modify the test procedure and repeat a testing of tested system 260 without testing the (already known to be defective) specific ECU 250. Such removal of a test from a set of tests in a procedure can improve test automation, e.g., by avoiding an already known to fail ECU, testing unit 210 can proceed to test other components in tested system 260. Otherwise described, an embodiment of invention can and may dynamically modify a test procedure 271 based on a result of a specific test, for example, dynamic modification of a test procedure may include removal of a test for a failed component or for a missing component or dynamic modification of a test procedure 271 may include adding a test 270 to a test procedure 271 based on automatically identifying a component in a tested system as described herein.

In some embodiments testing unit 210 a test procedure includes a plurality, set or group of tests 270 and testing unit 210 automatically determines the state of a tested system after conducting at least one of the tests. For example, a test procedure may include conducting five different tests 270 and testing unit 210 may check and report the results (e.g., fail/success) after each of the five tests 270. Accordingly, a user can be informed which exact test in a set of tests caused a failure.

In some embodiments testing unit 210 transmission a message over an internal network or bus, e.g., over infrastructures 150 or 253) is according to a specific protocol, and/or according to a procedure, and/or according to a component and/or according to a structure of the tested system. For example, based in a type of one of ECUs 250, testing unit 210 may select a specific protocol to use when communicating with the specific ECU 250. For example and as described, using data sheets and other material from a manufacturer, the protocols and services supported and provided by a specific ECU type may be known and thus be readily used when the type or ID of an ECU or service are known, either when the type or ID are provided as configuration data, or when the type or ID are automatically discovered as described herein.

In some embodiments, a deviation from an expected behavior of a component of a tested system, and/or a deviation from a protocol or a communication standard used by the tested system, and/or a vulnerability of the tested system are identified based on network activity in the tested system. For example, connected to an internal network or bus in the tested system, testing unit 210 identifies a deviation or vulnerability based on a flow of messages between parties, in the tested system, thus testing unit 210 identifies incorrect (or prematurely terminated) flows of messages. An incorrect or prematurely terminated flow, or a breach of a protocol may be associated with a vulnerability or malfunction by testing unit 210.

An agent as referred to herein and in the art is a (typically small) software component installed in a tested system. An agent gathers information in the tested system and sends the information to a testing unit. Using an agent requires effort, e.g., developing an agent, installing the agent in the tested system. Using an agent may produce incorrect tests results because the tested system (which includes an agent) is different from the systems which will be manufactured, and which will not include the agent.

As described, testing unit 210 can monitor a tested system as a black box. For example, connected to a tested system as described, testing unit 210 does not need or require an agent to be installed in the tested system. Accordingly, embodiments of the invention provide an advantage over known systems and methods which require an agent.

As described, using intimate knowledge and understanding of automotive protocols, testing unit 210 can derive the status of a tested system. For example, by tracking messages in a flow of messages, testing unit 210 can identify a deviation from an expected flow and record and report a failure. For example, a protocol or service definition may indicate a specific response messages that is to be sent in response to a specific request message, if testing unit 210 receives a request as defined but does not receive a response as defined by the protocol or service, testing unit 210 may determine a deviation occurred and/or a vulnerability was detected and/or the tested system has failed the test.

As described, the methods described herein may be automatically performed by testing unit 210, that is, with no (or with minimal) intervention of a human tester or operator. For example, following a connection (e.g., plugging a connector) of testing unit 210 to tested system 260, testing unit 210 can automatically, without any further intervention of an operator, test tested system 260. For example, testing unit 210 can automatically discover components in tested system 260 and test the discovered components, and testing unit 210 can automatically select tests 270 for testing the tested system. Such automation dramatically reduces time, effort and resources required in order to scan a tested system for vulnerabilities. Accordingly, embodiments of the invention decrease costs of testing and scanning for vulnerabilities, decrease the expertise required by an operator or employee, and improve test coverage.

For example, all an operator or employee needs to know is how to connect testing unit 210 to tested system 260, the operator or employee needs to know nothing about tested system 260. As for coverage, by automatically selecting test 270 according to test result or according to a state of tested system 260, embodiments of the invention may expand test coverage, e.g., repeat or continue tests until all components, flows, services or other relevant aspects of a tested system are tested. Initial configuration may be received by testing unit 210. For example, a list of components or services expected to be included in a tested system, metadata related to components, a specific test procedure 271 to perform and so on may be provided, e.g., by a user using keyboard, mouse and the like. With the reduction of time, effort resources and knowledge required for testing, embodiments of the invention enable testing at early stages of development thus providing yet another advantage.

Moreover, by automatically discovering specific hardware, services or applications included in, or running on a system being tested, testing unit 210 may specifically target the discovered components during a vulnerability scan and avoid wasting time scanning hardware, services or applications that are not included, nor exist in the tested system.

Automatic discovery done by testing unit 210 as described dramatically improves testing cycles of a product since testing unit 210 can automatically and repeatedly test (and retest) a product (e.g., while internal versions are released for testing), discover components and services and test the discovered elements, accordingly, testing of a tested system as described can discover defects or vulnerabilities at an early stage of development or production. For example, immediately a software version including a new service is installed in ECU 230, testing unit 210 can start a test procedure 271, automatically discover and identify the new service, and automatically test the newly added service, e.g., select a few tests 270 to be added to a test procedure 271 such the newly added service is tested. Similarly, a new ECU 250 added to tested system 260 can be automatically discovered, identified and tested as described.

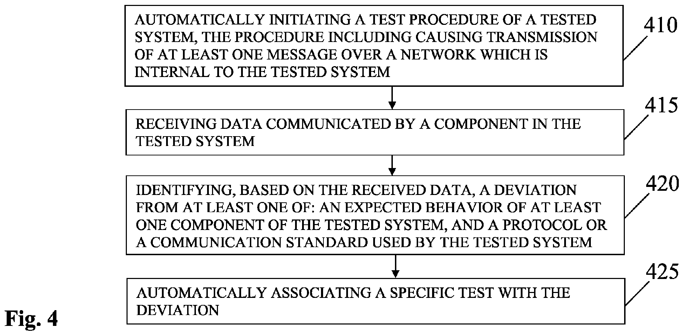

Reference is made to Fig. 4 which shows a flowchart of a method according to illustrative embodiments of the present invention. As shown by block 410, a method or flow may include automatically initiating a test procedure of a tested system, the procedure including causing transmission of at least one message over a network which is internal to the tested system. For example, testing unit 210 automatically starts a test upon being connected to tested system 260 or to ECU 230, the automation may include automated discovery of components and services, the automation can include automated selection of tests 270 to run on the tested system, the automation can include decision making, e.g., stop a test upon a failure, removing tests from a set of tests and restarting the test, adding tests to a test procedure and running a new test with the added tests and so on. For example, a failure of a specific ECU 250 in a first test procedure 271 may cause testing unit 210 to modify the test procedure such that it does not test the failing ECU 250 and so that, using a modified test procedure 271, other components in tested system 260 can be tested while the specific ECU 250 is operating properly. Otherwise described, testing unit 210 can automatically avoid testing a component or service known to have failed a previously executed test 270 or test procedure 271. Testing unit 210 can automatically modify tests 270 and/or test procedures 271 such that it selectively skips, or avoids, testing components or services which are known to have failed a test such that the rest of a tested system can be tested while the skipped or avoided services and components are operating normally, undisturbed.

As shown by block 415, a method may include receiving data communicated by a component in the tested system. For example, connected to a tested system over communication line, bus or network (e.g., over connection line 280), testing unit 210 receives any message or data communicated over communication infrastructure 253 as described.

As shown by block 420 a method performed by embodiments of the invention may include identifying, based on the received data, a deviation from at least one of: an expected behavior of at least one component of the tested system, and a protocol or a communication standard used by the tested system. For example, knowing a component is expected to respond to a specific message or event with a specific message or action, testing unit 210 identifies a deviation as described. For example, if, per SOME/IP, or DoIP which are used by an ECU, the ECU is expected to respond to a query with a specific response, but the ECU fails to respond as expected then testing unit 210 determines a deviation from a protocol has occurred. A deviation may be from an expected action or function. For example, possibly upon starting the engine, testing unit 210 may expect an engine ECU to send a query to the oil pressure sensor (or ECU), if such message is not seen, received or detected as described then testing unit 210 determines a deviation form an expected behavior or function has occurred.

As shown by block 425, a method performed by embodiments of the invention may include automatically associating a specific test with the deviation. For example, if a specific ECU 250 fails during a specific test 270 in a test procedure as described then testing unit 210 records the specific test 270 in association with the failing ECU 250 and thus can inform a user that the specific ECU 250 failed the specific test.

Further embodiments pertain to:
(1) A method of testing comprising:
   automatically initiating a test procedure of a tested system, the procedure including causing transmission of at least one message over a network which is internal to the tested system;
   receiving data communicated by a component in the tested system;
   identifying, based on the received data, a deviation from at least one of:
      an expected behavior of at least one component of the tested system, and
      a protocol or a communication standard used by the tested system; and
      automatically associating a specific test with the deviation.
(2) The method of (1), comprising generating traffic on the internal network by selectively randomizing data in messages sent over the internal network.
(3) The method of (1) or (2), comprising automatically identifying, based on the received data, at least one service provided by at least one component in the tested system.
(4) The method of any one of (1) to (3), comprising automatically identifying and determining a type and function of a component included in the tested system.
(5) The method of any one of (1) to (4), comprising automatically modifying the test procedure based on at least one of: a service and a component discovered in the tested system.
(6) The method of any one of (1) to (5), comprising automatically associating a specific component or service with the deviation.
(7) The method of any one of (1) to (6), comprising sending a message within the tested system and determining a state of a component based on one of: a response, and a lack of response.
(8) The method of any one of (1) to (7), wherein the deviation is at least one of:
   an absence of a message;
   an unexpected content in a message;
   an absence of a modification of a message;
   a mismatch with an expected sequence of events.
(9) The method of any one of (1) to (8), comprising:
   receiving a list of components included in the tested system;
   associating each of the components in the list with a component automatically identified on the network based on messages from component; and
   if not all components in the list are associated with a component on the network, then updating a log and/or alert a user.
(10) The method of any one of (1) to (9), wherein the at least one message is automatically generated based on automatically identified, at least one of:
   a service provided by a component in the tested system, and
   a type and function of a component included in the tested system.
(11) The method of any one of (1) to (10), wherein the at least one message is generated based on at least one of: a protocol adhered to by a component in the tested system, a service provided by a component in the tested system and a function of a component in the tested system.
(12) The method of any one of (1) to (11), comprising identifying a procedure or test that caused the deviation from an expected behavior.
(13) The method of any one of (1) to (12), wherein the protocol and communication standard are used by manufacturers of the tested system or by the vehicle industry.
(14) The method of any one of (1) to (13), wherein the tested system is designed/adapted to be included in a vehicle, and wherein the network internal to the tested system is an in-vehicle network.
(15) The method of any one of (1) to (14), wherein the deviation includes one of: a hardware component that stopped functioning properly and a software component that stopped functioning properly.
(16) The method of any one of (1) to (15), comprising selecting a set of tests to be included in the test procedure based on the number and type of: components in the tested system and services provided thereby. (either auto-discoveed or provided in a list)
(17) The method of any one of (1) to (16), wherein the procedure includes a plurality of tests and wherein the method comprises:
   automatically determining the state of the tested system after conducting at least one of the tests; and
   automatically determining whether or not the tested system passed the at least one test.
(18) The method of any one of (1) to (17), wherein the transmission of the at least one message is according to at least one of: a protocol, a procedure, a component and/or a structure of the tested system.
(19) The method of any one of (1) to (18), wherein a deviation from an expected behavior includes a crash or a restart of a component.
(20) A testing unit adapted to:
   automatically initiate a test procedure of a tested system, the procedure including causing transmission of at least one message over a network which is internal to the tested system;
   receiving data communicated by a component in the tested system;
   identifying, based on the received data, a deviation from at least one of:
      an expected behavior of at least one component of the tested system, and
      a protocol or a communication standard used by the tested system; and
      automatically associating a specific test with the deviation.

In the detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items.

Unless explicitly stated, the method embodiments described herein are not constrained to a particular order in time or to a chronological sequence. Additionally, some of the described method elements can occur, or be performed, simultaneously, at the same point in time, or concurrently. Some of the described method elements may be skipped, or they may be repeated, during a sequence of operations of a method.

In the description and claims of the present application, each of the verbs, "comprise" "include" and "have", and conjugates thereof, are used to indicate that the object or objects of the verb are not necessarily a complete listing of components, elements or parts of the subject or subjects of the verb. Unless otherwise stated, adjectives such as "substantially" and "about" modifying a condition or relationship characteristic of a feature or features of an embodiment of the disclosure, are understood to mean that the condition or characteristic is defined to within tolerances that are acceptable for operation of an embodiment as described. In addition, the word "or" is considered to be the inclusive "or" rather than the exclusive or, and indicates at least one of, or any combination of items it conjoins.

Descriptions of embodiments of the invention in the present application are provided by way of example and are not intended to limit the scope of the invention. The described embodiments comprise different features, not all of which are required in all embodiments. Some embodiments utilize only some of the features or possible combinations of the features. Variations of embodiments of the invention that are described, and embodiments comprising different combinations of features noted in the described embodiments, will occur to a person having ordinary skill in the art. The scope of the invention is limited only by the claims.

While certain features of the invention have been illustrated and described herein, many modifications, substitutions, changes, and equivalents may occur to those skilled in the art. It is, therefore, to be understood that the appended claims are intended to cover all such modifications and changes as fall within the true spirit of the invention.

Various embodiments have been presented. Each of these embodiments may of course include features from other embodiments presented, and embodiments not specifically described may include various features described herein.

## Claims

1. A method of testing comprising:
automatically initiating a test procedure of a tested system, the procedure including causing transmission of at least one message over a network which is internal to the tested system;
receiving data communicated by a component in the tested system;
identifying, based on the received data, a deviation from at least one of:
an expected behavior of at least one component of the tested system, and
a protocol or a communication standard used by the tested system; and
automatically associating a specific test with the deviation.

2. The method of claim 1, comprising generating traffic on the internal network by selectively randomizing data in messages sent over the internal network.

3. The method of claim 1, comprising automatically identifying, based on the received data, at least one service provided by at least one component in the tested system.

4. The method of claim 1, comprising automatically identifying and determining a type and function of a component included in the tested system.

5. The method of claim 1, comprising automatically modifying the test procedure based on at least one of: a service and a component discovered in the tested system.

6. The method of claim 1, comprising automatically associating a specific component or service with the deviation.

7. The method of claim 1, comprising sending a message within the tested system and determining a state of a component based on one of: a response, and a lack of response.

8. The method of claim 1, wherein the deviation is at least one of:
an absence of a message;
an unexpected content in a message;
an absence of a modification of a message;
a mismatch with an expected sequence of events.

9. The method of claim 1, comprising:
receiving a list of components included in the tested system;
associating each of the components in the list with a component automatically identified on the network based on messages from component; and
if not all components in the list are associated with a component on the network, then updating a log and/or alert a user.

10. The method of claim 1, wherein the at least one message is automatically generated based on automatically identified, at least one of:
a service provided by a component in the tested system, and
a type and function of a component included in the tested system.

11. The method of claim 1, wherein the at least one message is generated based on at least one of: a protocol adhered to by a component in the tested system, a service provided by a component in the tested system and a function of a component in the tested system.

12. The method of claim 1, comprising identifying a procedure or test that caused the deviation from an expected behavior.

13. The method of claim 1, wherein the protocol and communication standard are used by manufacturers of the tested system or by the vehicle industry.

14. The method of claim 1, wherein the tested system is designed/adapted to be included in a vehicle, and wherein the network internal to the tested system is an in-vehicle network.

15. A testing unit adapted to:
automatically initiate a test procedure of a tested system, the procedure including causing transmission of at least one message over a network which is internal to the tested system;
receiving data communicated by a component in the tested system;
identifying, based on the received data, a deviation from at least one of:
an expected behavior of at least one component of the tested system, and
a protocol or a communication standard used by the tested system; and
automatically associating a specific test with the deviation.
